# EUROPÄISCHE PATENTANMELDUNG

(11) **EP 4 124 776 A1**
(43) Veröffentlichungstag der Anmeldung: **01.02.2023**
(21) Anmeldenummer: 22166625.8
(22) Anmeldetag: 05.04.2022
(51) Int. Cl.: F16H 7/02, F16G 1/00

(54) **LASTÜBERWACHUNG EINES RIEMENTRIEBS**

(30) Priorität: 28.07.2021 DE 102021119628
(71) Anmelder: CLAAS Selbstfahrende Erntemaschinen GmbH, 33428 Harsewinkel (DE)
(72) Erfinder: Koch, Markus, 48369 Saerbeck (DE); Zeuner, Maik, 33719 Bielefeld (DE); Holtkotte, Axel, 59964 Medebach (DE)
(74) Vertreter: CLAAS Gruppe

(57) **Zusammenfassung**

Offenbart ist eine Lastüberwachung eines Riementriebs (5) mit einer Antriebsscheibe (7), die von einem Motor angetrieben wird, mit einer Abtriebsscheibe (9), die mit einem Aggregat rotierfest verbunden ist, und mit einem endlosen Riemen (8, 12), der auf der Antriebsscheibe (7) und der Abtriebsscheibe (9) liegt, ein Antriebsmoment des Motor als Zugkraft in einem Zugtrum (10) auf die Abtriebsscheibe (9) überträgt und in einem Leertrum (11) von der Abtriebsscheibe (9) zurück zu der Antriebsscheibe (7) verläuft, wobei im Betrieb des Riementriebs (5) mindestens ein Sensor (13) in aufeinanderfolgenden Arbeitspunkten Werte einer Temperatur und einer Drehzahl des Riemens (8, 12) misst und eine Auswerteeinheit anhand der gemessenen Werte eine Belastung des Riementriebs (5) in dem Arbeitspunkt bestimmt.

Um Verschleiß des Riemens (8, 12) zu beurteilen wird erfindungsgemäß vorgeschlagen, dass zunächst ein Kennfeld des Riementriebs (5) bestimmt und in der Auswerteeinheit hinterlegt wird, das eine von dem Riemen (8, 12) übertragene Leistung über der Drehzahl und der Temperatur darstellt, und dass die Auswerteeinheit aus den Werten anhand des Kennfelds eine in den Arbeitspunkten von dem Riementrieb (5) jeweils übertragene Leistung berechnet.

## Beschreibung

Die Erfindung betrifft eine Lastüberwachung eines Riementriebs mit einer Antriebsscheibe, die von einem Motor angetrieben wird, mit einer Abtriebsscheibe, die mit einem Aggregat rotierfest verbunden ist, und mit einem endlosen Riemen, der auf der Antriebsscheibe und der Abtriebsscheibe liegt, ein Antriebsmoment des Motor als Zugkraft in einem Zugtrum auf die Abtriebsscheibe überträgt und in einem Leertrum von der Abtriebsscheibe zurück zu der Antriebsscheibe verläuft, wobei im Betrieb des Riementriebs mindestens ein Sensor in aufeinanderfolgenden Arbeitspunkten Werte einer Temperatur und einer Drehzahl des Riemens misst und eine Auswerteeinheit anhand der gemessenen Werte eine Belastung des Riementriebs in dem Arbeitspunkt bestimmt.

Riementriebe übertragen insbesondere in landwirtschaftlichen Maschinen wie Mähdreschern die Antriebsenergie des Motors über ihre Antriebsscheibe und den Riemen auf das jeweils mit der Abtriebsscheibe verbundene Aggregat. Bauteilversagen eines Riemens verursacht nicht nur außerplanmäßige Stillstandszeiten für den notwendigen Austausch, sondern kann auch durch mit hoher Geschwindigkeit schlagende oder umherfliegende Riemenstücke zu Schäden an umliegenden Bauteilen und zu erheblichen Verschmutzungen und Reinigungsbedarf der Umgebung führen.

Im Rahmen einer Lastüberwachung wie eingangs beschrieben schlägt DE 10 2010 002 551 A1 vor, anhand von Temperatur und Dehnung des Riemens einen bevorstehenden Ausfall des Riemens oder des Aggregats frühzeitig zu erkennen. Die Erfahrung zeigt, dass aus der Temperatur in einem Arbeitspunkt keine zuverlässigen Aussagen über den Verschleiß eines Riemens oder ein bevorstehendes Bauteilversagen abgeleitet werden können.

Im Hintergrund der Erfindung ist aus der Produktpalette der Anmelderin ein Riemen mit eingebetteten Metallplättchen für eine landwirtschaftliche Maschine bekannt, der eine berührungslose Erfassung der Dehnung und damit Rückschlüsse auf die Belastung des Riemens erlaubt.

### Aufgabe

Der Erfindung liegt die Aufgabe zugrunde, den Verschleiß des Riemens zu beurteilen.

### Lösung

Ausgehend von dem bekannten Verfahren wird erfindungsgemäß vorgeschlagen, dass zunächst ein Kennfeld des Riementriebs bestimmt und in der Auswerteeinheit hinterlegt wird, das eine von dem Riemen übertragene Leistung über der Drehzahl und der Temperatur darstellt, und dass die Auswerteeinheit aus den Werten anhand des Kennfelds eine in den Arbeitspunkten von dem Riementrieb jeweils übertragene Leistung berechnet.

Die Erfindung beruht auf der Erkenntnis der Anmelderin, dass einerseits in einem Arbeitspunkt eines Riementriebs die Schleißwirkung auf den Riemen mit der von dem Riementrieb übertragenen Leistung korreliert und andererseits die übertragene Leistung in einem für jeden Riementrieb spezifischen Kennfeld nur von der Temperatur und der Drehzahl abhängt. Das erfindungsgemäße Verfahren erlaubt auf dieser Grundlage die Beurteilung der Schleißwirkung auf den Riemen in jedem konkreten Arbeitspunkt.

Vorzugsweise integriert in einer erfindungsgemäßen Lastüberwachung die Auswerteeinheit die Leistung über einer Mehrzahl von Arbeitspunkten als von dem Riementrieb geleistete Arbeit in einem Lastkollektiv. Die bevorzugte Ausgestaltung beruht auf der weiteren Erkenntnis der Anmelderin, dass der Verschleißzustand eines Riemens mit der Historie der über seine Betriebsdauer übertragenen Leistung korreliert und sich als geleistete Arbeit sowohl anschaulich als auch sinnvoll zahlenmäßig fassen lässt. Die geleistete Arbeit eines Riementriebs eröffnet auch eine Grundlage für die Abrechnung eines Leasingvertrags für das angetriebene Aggregat. In einem erfindungsgemäßen Verfahren können die integrierten Leistungen anhand weiterer Einflussfaktoren im Arbeitspunktbeispielsweise extrem hohe Temperatur-, Drehzahl- oder Schlupfwerte - gewichtet werden.

Vorzugsweise initiiert in einer solchen erfindungsgemäßen Lastüberwachung die Auswerteeinheit einen vorbeugenden Austausch des Riemens, wenn das Lastkollektiv eine zulässige Arbeit des Riemens überschreitet. Die erfindungsgemäße Verknüpfung des vorbeugenden Austauschs mit dem Lastkollektiv vermeidet sowohl einen in Bezug auf den Verschleißzustand unnötig frühen als auch einen in Bezug auf ein Versagen zu späten Austausch.

Vorzugsweise generiert in einer erfindungsgemäßen Lastüberwachung die Auswerteeinheit bei einer kritischen Steigerung der gemessenen Temperatur ein Warnsignal. Das erfindungsgemäße Warnsignal beruht auf der Erkenntnis der Erfinder, dass vor einem Bauteilversagen die Temperatur des Riemens häufig sprunghaft ansteigt.

Vorzugsweise wird in einer erfindungsgemäßen Lastüberwachung das Kennfeld in einem Prüfstand für den Riementrieb bestimmt. Im Prüfstand können Störgrößen, die die Messungen verfälschen könnten, vermieden werden.

Vorzugsweise ist in einer erfindungsgemäßen Lastüberwachung der mindestens eine Sensor für die Messung der Temperatur außerhalb des Riemens angeordnet. Insbesondere kann im Rahmen eines erfindungsgemäßen Verfahrens eine Oberflächentemperatur des Riemens berührungslos, beispielsweise mit einem Infrarotsensor gemessen werden. Alternativ können ähnlich der Metallplättchen im Stand der Technik Sensoren im Riemen integriert sein, die die gemessenen Daten über eine Funkverbindung an die Auswerteeinheit übermitteln. Derartige Sensoren stehen insbesondere in RFID-Technik zur Verfügung.

Vorzugsweise ist in einer erfindungsgemäßen Lastüberwachung der Riementrieb ein Variatorgetriebe oder der Riemen ein Kraftband. Variatorgetriebe und Kraftbänder (auch: Verbundriemen) kommen in unterschiedlichen Ausprägungen in landwirtschaftlichen Maschinen, insbesondere in Mähdreschern zum Einsatz.

Vorzugsweise weist eine landwirtschaftliche Maschine, insbesondere ein Mähdrescher eine erfindungsgemäße Lastüberwachung auf. Bekannte landwirtschaftliche Maschinen, insbesondere Mähdrescher weisen eine große Zahl von Riementrieben auf. Die erfindungsgemäße Lastüberwachung unterstützt den Maschinenführer bei der Beurteilung des Verschleißzustands und insbesondere bei der Vermeidung von Bauteilversagen der Riementriebe im Betrieb.

Vorzugsweise plausibilisiert in einer solchen landwirtschaftlichen Maschine bzw. einer erfindungsgemäßen Lastüberwachung die Auswerteeinheit die übertragene Leistung anhand weiterer Parameter in dem Arbeitspunkt, insbesondere einem Schlupf des Riemens, einem Übersetzungsverhältnis zwischen der Antriebsscheibe und der Abtriebsscheibe, einer Auslastung des Motors, einer Drehzahl des Aggregats und/oder einer Umgebungstemperatur, einer Fahrgeschwindigkeit, einem Hydraulikdruck, einer geernteten Fruchtart und/oder einer Schichthöhe der geernteten Frucht in einem Einlass des Aggregats.

### Ausführungsbeispiel

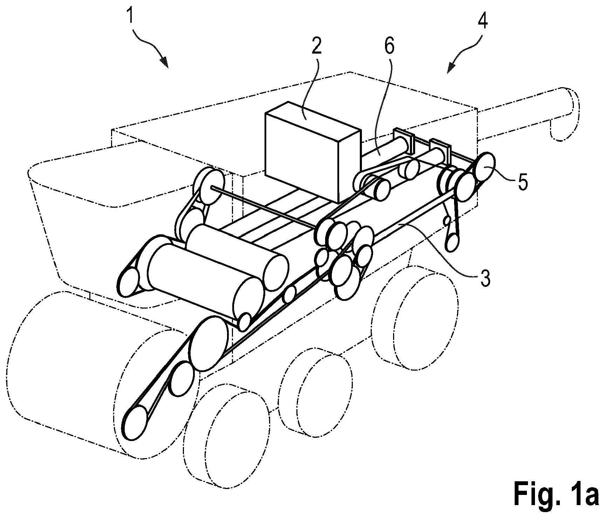

Die Erfindung wird nachfolgend anhand eines Ausführungsbeispiels erläutert. Gezeigt ist schematisch
- in Figur 1a: ein erfindungsgemäßer Mähdrescher,

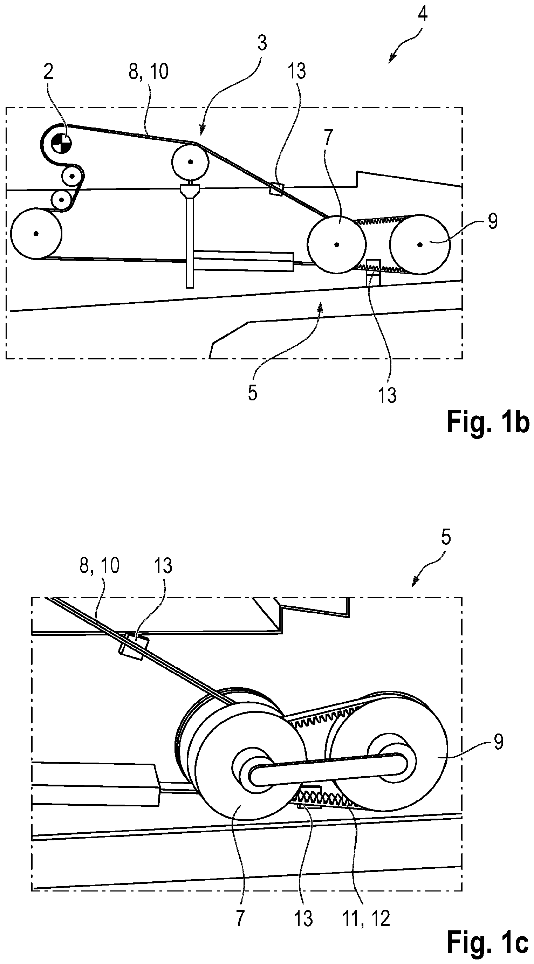

- in Figur 1b: das Heck des Mähdreschers,
- in Figur 1c: ein Detail des Hecks,
- in Figur 2: gemessene Werte von Drehzahl und Temperatur eines Riementriebs und
- in Figur 3: ein Kennfeld des Riementriebs.

Der erfindungsgemäße Mähdrescher 1 weist einen Motor 2, an dem Motor 2 einen ersten Riementrieb 3 und an dem ersten Riementrieb 3 im Heck 4 einen zweiten Riementrieb 5 für einen Rotorabscheider-Aggregat 6 auf.

Eine nicht dargestellte Antriebsscheibe des ersten Riementriebs 3 wird von dem Motor 2 angetrieben, eine Antriebsscheibe 7 des zweiten Riementriebs 5 ist zugleich Abtriebsscheibe des ersten Riementriebs 3. Ein Riemen 8 des ersten Riementriebs 3 ist ein Kraftband. Der zweite Riementrieb 5 ist ein Variatorgetriebe. Eine Abtriebsscheibe 9 des zweiten Riebentriebs ist mit dem Aggregat 6 rotierfest verbunden.

An einem Zugtrum 10 des Riemens 8 des ersten Riementriebs 3 und an einem Leertrum 11 eines Riemens 12 des zweiten Riementriebs 5 ist jeweils ein Sensor 13 angebracht, der berührungslos über eine Infrarotstrahlung des Riemens 8, 12 dessen jeweilige Temperatur misst. An der Antriebsscheibe des ersten Riementriebs 3 und an der Antriebsscheibe 7 und der Abtriebsscheibe 9 des zweiten Riementriebs 5 sind nicht dargestellte Sensoren 13 zum Messen der jeweiligen Drehzahlen angebracht.

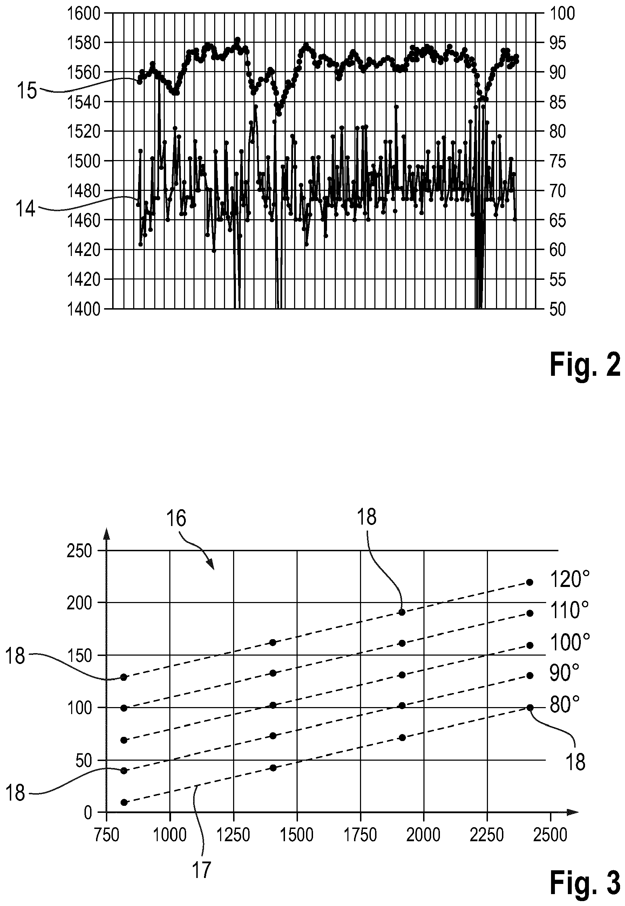

In einer Auswerteeinheit des Mähdreschers 1 werden die für jeden Arbeitspunkt von den Sensoren 13 aufgenommenen Werte von Temperatur und Drehzahl in einem Datenspeicher gespeichert. Die Auswerteeinheit und der Datenspeicher sind nicht dargestellt. Figur 2 zeigt beispielhaft für den zweiten Riementrieb 5 einen Drehzahlverlauf 14 der Antriebsscheibe 7, gemessen in Umdrehungen pro Minute und einen Temperaturverlauf 15 des Riemens 12, gemessen in Grad Celsius.

Figur 3 zeigt beispielhaft ein Kennfeld 16 des zweiten Riementriebs 5 für fünf verschiedene Temperaturen in einer Kurvenschar 17 von Leistungsverläufen, gemessen in Kilowatt über der Drehzahl, gemessen in Umdrehungen pro Minute. Die Stützpunkte 18 des Kennfelds 16 wurden für den zweiten Riementrieb 5 in einem nicht dargestellten Prüfstand aufgenommen. Die Auswerteeinheit bestimmt aus den gemessenen Werten von Temperatur und Drehzahl des zweiten Riementriebs 5 und dem Kennfeld 16 die in jedem Arbeitspunkt zu dem Aggregat 6 übertragene Leistung und speichert diese gleichfalls in dem Datenspeicher.

Die Auswerteeinheit plausibilisiert die übertragene Leistung anhand weiterer Parameter in jedem Arbeitspunkt anhand eines Schlupfes des Riemens 12, anhand eines Übersetzungsverhältnisses zwischen Antriebsscheibe 7 und der Abtriebsscheibe 9, anhand einer Auslastung des Motors 2, anhand einer gemessenen Drehzahl des Aggregats 6, anhand einer Umgebungstemperatur, anhand einer Fahrgeschwindigkeit, eines Hydraulikdrucks, anhand einer geernteten Fruchtart und anhand einer Schichthöhe der geernteten Frucht in einem Einlass in das Aggregat 6. Der Einlass und die Schichthöhe sind wiederum nicht dargestellt.

Bei anhand der weiteren Parameter nicht plausiblen Werten der übertragenen Leistung warnt die Auswerteeinheit den Maschinenführer, bei Überschreiten von hinterlegten Grenzwerten für die übertragene Leistung oder für den Anstieg der gemessenen Temperatur in einer Zeiteinheit führt die Auswerteeinheit eine Sicherheitsabschaltung des Aggregats 6 aus.

Außerdem integriert die Auswerteeinheit die in allen Arbeitspunkten übertragene Leistung in einem Lastkollektiv als von dem zweiten Riementrieb 5 geleistete Arbeit. In der Auswerteeinheit ist ein Grenzwert für eine zulässige Arbeit des Riemens 12 hinterlegt. Die Auswerteeinheit bestimmt anhand des Lastkollektivs eine Prognose für das Erreichen des Grenzwerts und fordert den Maschinenführer in einem gleichfalls hinterlegten Austauschintervall zum Austausch des Riemens 12 auf. Bei Überschreiten des Grenzwerts für die übertragene Leistung blockiert die Auswerteeinheit den Weiterbetrieb des Aggregats 6.

### Bezugszeichenliste

- 1: Mähdrescher
- 2: Motor
- 3: erster Riementrieb
- 4: Heck
- 5: zweiter Riementrieb
- 6: Rotorabscheider-Aggregat
- 7: Antriebsscheibe
- 8: Riemen
- 9: Abtriebsscheibe
- 10: Zugtrum
- 11: Leertrum
- 12: Riemen
- 13: Sensor
- 14: Drehzahlverlauf
- 15: Temperaturverlauf
- 16: Kennfeld
- 17: Kurvenschar
- 18: Stützpunkt

## Patentansprüche

1. Lastüberwachung eines Riementriebs (3, 5) mit einer Antriebsscheibe (7), die von einem Motor (2) angetrieben wird, mit einer Abtriebsscheibe (9), die mit einem Aggregat (6) rotierfest verbunden ist, und mit einem endlosen Riemen (8, 12), der auf der Antriebsscheibe (7) und der Abtriebsscheibe (9) liegt, ein Antriebsmoment des Motor (2) als Zugkraft in einem Zugtrum (10) auf die Abtriebsscheibe (9) überträgt und in einem Leertrum (11) von der Abtriebsscheibe (9) zurück zu der Antriebsscheibe (7) verläuft, wobei im Betrieb des Riementriebs (3, 5) mindestens ein Sensor (13) in aufeinanderfolgenden Arbeitspunkten Werte einer Temperatur und einer Drehzahl des Riemens (8, 12) misst und eine Auswerteeinheit anhand der gemessenen Werte eine Belastung des Riementriebs (3, 5) in dem Arbeitspunkt bestimmt, **dadurch gekennzeichnet, dass** zunächst ein Kennfeld (16) des Riementriebs (3, 5) bestimmt und in der Auswerteeinheit hinterlegt wird, das eine von dem Riemen (8, 12) übertragene Leistung über der Drehzahl und der Temperatur darstellt, und dass die Auswerteeinheit aus den Werten anhand des Kennfelds (16) eine in den Arbeitspunkten von dem Riementrieb (3, 5) jeweils übertragene Leistung berechnet.

2. Lastüberwachung nach dem vorgenannten Anspruch, **dadurch gekennzeichnet, dass** die Auswerteeinheit die Leistung über einer Mehrzahl von Arbeitspunkten als von dem Riementrieb (3, 5) geleistete Arbeit in einem Lastkollektiv integriert.

3. Lastüberwachung nach dem vorgenannten Anspruch, **dadurch gekennzeichnet, dass** die Auswerteeinheit einen vorbeugenden Austausch des Riemens (8, 12) initiiert, wenn das Lastkollektiv eine zulässige Arbeit des Riemens (8, 12) überschreitet.

4. Lastüberwachung nach einem der vorgenannten Ansprüche, **dadurch gekennzeichnet, dass** die Auswerteeinheit bei einer kritischen Steigerung der gemessenen Temperatur ein Warnsignal generiert.

5. Lastüberwachung nach einem der vorgenannten Ansprüche, **dadurch gekennzeichnet, dass** das Kennfeld (16) in einem Prüfstand für den Riementrieb (3, 5) bestimmt wird.

6. Lastüberwachung nach einem der vorgenannten Ansprüche, **dadurch gekennzeichnet, dass** der mindestens eine Sensor (13) für die Messung der Temperatur außerhalb des Riemens (8, 12) angeordnet ist.

7. Lastüberwachung nach einem der vorgenannten Ansprüche, **dadurch gekennzeichnet, dass** der Riementrieb (3, 5) ein Variatorgetriebe oder der Riemen (8) ein Kraftband ist.

8. Lastüberwachung nach einem der vorgenannten Ansprüche, **dadurch gekennzeichnet, dass** die Auswerteeinheit die von dem Riementrieb (3, 5) übertragene Leistung anhand weiterer Parameter in dem Arbeitspunkt, insbesondere einem Schlupf des Riemens (8, 12), einem Übersetzungsverhältnis zwischen der Antriebsscheibe (7) und der Abtriebsscheibe (9), einer Auslastung des Motors (2), einer Drehzahl des Aggregats (6) und/oder einer Umgebungstemperatur plausibilisiert.

9. Landwirtschaftliche Maschine, insbesondere Mähdrescher (1) mit einer Lastüberwachung nach einem der vorgenannten Ansprüche.

10. Landwirtschaftliche Maschine nach dem vorgenannten Anspruch, **dadurch gekennzeichnet, dass** die Auswerteeinheit die übertragene Leistung anhand weiterer Parameter in dem Arbeitspunkt, insbesondere einer Fahrgeschwindigkeit, einem Hydraulikdruck, einer geernteten Fruchtart und/oder einer Schichthöhe der geernteten Frucht in einem Einlass des Aggregats (6) plausibilisiert.
